# EUROPEAN PATENT SPECIFICATION

(11) **EP 4 383 375 B1**
(45) Date of publication and mention of the grant of the patent: **21.10.2026**
(21) Application number: 22852835.2
(22) Date of filing: 20.07.2022
(51) Int. Cl.: H01M 4/62, H01M 4/13, H01M 4/139, H01M 10/052, H01M 4/134

(54) **NON-AQUEOUS ELECTROLYTE SECONDARY BATTERY ELECTRODE BINDER, NON-AQUEOUS ELECTROLYTE SECONDARY BATTERY ELECTRODE COMPOSITION, NON-AQUEOUS ELECTROLYTE SECONDARY BATTERY ELECTRODE, AND NON AQUEOUS ELECTROLYTE SECONDARY BATTERY**
ELEKTRODENBINDEMITTEL FÜR NICHTWÄSSRIGE ELEKTROLYTE, ELEKTRODENZUSAMMENSETZUNG FÜR NICHTWÄSSRIGE ELEKTROLYTE, ELEKTRODE FÜR NICHTWÄSSRIGE ELEKTROLYTE UND NICHTWÄSSRIGE ELEKTROLYTSEKUNDÄRZELLE
LIANT D'ÉLECTRODE POUR ACCUMULATEUR À ÉLECTROLYTE NON AQUEUX, COMPOSITION D'ÉLECTRODE POUR ACCUMULATEUR À ÉLECTROLYTE NON AQUEUX, ÉLECTRODE POUR ACCUMULATEUR À ÉLECTROLYTE NON AQUEUX ET ACCUMULATEUR À ÉLECTROLYTE NON AQUEUX

(30) Priority: 04.08.2021 JP 2021128384
(43) Date of publication of application: 12.06.2024
(73) Proprietor: Nippon Paper Industries Co., Ltd., Tokyo 114-0002 (JP)
(72) Inventor: SAKAJIRI Takayuki, Tokyo 114-0002 (JP); INOUE Kazuhiko, Tokyo 114-0002 (JP); NISHIDE Daisuke, Tokyo 114-0002 (JP)
(74) Representative: Kuhnen & Wacker Patent- und Rechtsanwaltsbüro PartG mbB
(86) International application number: PCT/JP2022/028157
(87) International publication number: WO 2023/013411

(56) References cited:
- EP-A1- 2 355 215
- WO-A1-2010/061871
- WO-A1-2010/061871
- WO-A1-2021/080006
- CN-A- 112 164 799
- CN-A- 112 164 799
- JP-A- 2012 094 498
- US-A1- 2011 135 982
- HIDAKA YASUHIRO: "CN112164799A -BORON CROSS-LINKING BINDER, ELECTRODE PLATE AND PREPARATION METHOD", 3 June 2010 (2010-06-03), XP093287009, Retrieved from the Internet <URL:https://batavia.internal.epo.org/citenpl/prod/web/citenpl/citenpl.html?dossierId=3146063&dossierNumber=EP22852835&drawerId=40957780>

## Description

### Technical Field

The present invention relates to a non-aqueous electrolyte secondary battery electrode binder, a non-aqueous electrolyte secondary battery electrode composition, a non-aqueous electrolyte secondary battery electrode, and a non-aqueous electrolyte secondary battery.

### Background Art

In recent years, electronic devices, particularly portable devices such as mobile phones such as smartphones, tablets, and laptop personal computers have been reduced in size, weight, and thickness, and increased in performance, and portable devices have become widespread. With the diversification of use ranges of such portable devices, batteries for driving these portable devices have become very important components. Among batteries, non-aqueous electrolyte secondary batteries typified by lithium ion secondary batteries, which have high energy density and high capacity, are widely used.

Usually, the non-aqueous electrolyte secondary battery is produced as follows. That is, a negative electrode containing a negative electrode active material made of a carbon material or the like capable of occluding and releasing lithium ions, and a positive electrode containing a positive electrode active material made of a lithium-containing transition metal composite oxide (for example, LiCoO₂, LiNiO₂, LiMn₂O₄, and the like) are each formed in a sheet shape on a surface of a metal foil as a current collecting substrate (current collector) to obtain a sheet-shaped positive electrode and a sheet-shaped negative electrode. Then, the sheet-shaped positive electrode and the sheet-shaped negative electrode are wound or laminated with a separator, which is also formed in a sheet shape, interposed therebetween, and housed in a case. The sheet-shaped positive electrode and the sheet-shaped negative electrode have a structure including a metal foil serving as a current collecting substrate (current collector) and a mixture layer containing an active material formed on a surface of the metal foil, and can be formed by applying a negative electrode active material slurry (or paste) or a positive electrode active material slurry (or paste) onto a current collecting material and drying the slurry.

The negative electrode active material slurry (paste) contains a binder (binder) in addition to the negative electrode active material made of a carbon material or the like capable of occluding and releasing lithium ions. As the binder, a binder for a negative electrode containing styrene/butadiene latex (SBR) as a main component is disclosed in Patent Literature 1.

According to Patent Literature 1, carboxymethyl cellulose as a water-soluble thickener is dissolved in water to prepare an aqueous solution, and SBR and a negative electrode active material are mixed with the aqueous solution to produce a slurry. The slurry is applied onto a substrate as a coating liquid and dried to form a sheet-shaped negative electrode.

On the other hand, in the production of a positive electrode of a non-aqueous electrolyte secondary battery, an organic solvent such as N-methyl-2-pyrrolidone (NMP) has been conventionally used as a solvent. However, in recent years, water has been used as a solvent due to a reduction in cost required for handling or an influence on environmental load at the time of discharge.

The positive electrode active material slurry (paste) contains a binder in addition to the lithium-containing transition metal composite oxide (for example, LiCoO₂, LiNiO₂, LiMn₂O₄, and the like) as a positive electrode active material, carbon as a conductive material, and the like. As the binder, cellulose having a viscosity of 4000 mPa·s or higher in a 1% aqueous solution, such as carboxymethyl cellulose, is described in Patent Literature 2. Patent Literature 2 describes that carboxymethyl cellulose is added to pure water together with a conductive material, polytetrafluoroethylene (PTFE), and the like to prepare an active material paste. Moreover, Patent Literature 3 and Patent Literature 4 refer to electrode binder compositions according to the prior art.

### Citation List

### Patent Literature

Patent Literature 1: JP 5-74461 A
Patent Literature 2: JP 2003-157847 A
Patent Literature 3: CN 112 164 799 A
Patent Literature 4:WO 2010/061871 A1

However, in both Patent Literature 1 and Patent Literature **2,** there are problems that a film strength when applied onto a substrate as an electrode composition is weak and durability is poor.

Therefore, an object of the present invention is to obtain a non-aqueous electrolyte secondary battery electrode binder having excellent battery characteristics and film characteristics. Also, another object of the present invention is to obtain a non-aqueous electrolyte secondary battery electrode composition, a non-aqueous electrolyte secondary battery electrode, and a non-aqueous electrolyte secondary battery, which use the non-aqueous electrolyte secondary battery electrode binder.

### Summary of Invention

### Solution to Problem

As a result of diligent efforts, the present inventors have found that the problems can be solved by the following [1] to [8].

That is, according to the present invention,
[1] A non-aqueous electrolyte secondary battery electrode binder, at least including: carboxymethyl cellulose and/or a salt thereof having a degree of carboxymethyl substitution per anhydroglucose unit of 0.5 to 1.2 and a viscosity of a 1% by mass aqueous solution measured with a B-type viscometer, 30 rpm, at 25°C of 1,000 to 20,000 mPa·s; and a lithium borate salt,
[2] The non-aqueous electrolyte secondary battery electrode binder according to [1], in which the lithium borate salt is contained in a range of 0.1% to 20% by mass with respect to 100% by mass of a solid content of the carboxymethyl cellulose or the salt thereof,
[3] The non-aqueous electrolyte secondary battery electrode binder according to [1] or [2], in which when 2 liters of a 0.3% by mass aqueous solution of the carboxymethylated cellulose or the salt thereof having dry mass B is prepared, and entirely filtered through a 250 mesh filter under a reduced pressure condition of -200 mmHg, and dry mass A of a residue on the filter after filtration is measured, the carboxymethylated cellulose or the salt thereof has a ratio of the dry mass A to the dry mass B of less than 50 ppm,
[4] The non-aqueous electrolyte secondary battery electrode binder according to [1] or [2], in which the lithium borate salt is lithium tetraborate,
[5] The binder for an electrode of a non-aqueous electrolyte secondary battery according to [1] or [2], in which the carboxymethyl cellulose or the salt thereof has a D90 of less than 100 µm, the D90 being a particle size at which 90% of particles are included when integrated from a minimum value, in a particle size distribution based on a volume average particle size measured by a laser diffraction/scattering particle size distribution meter using methanol as a dispersion medium,
[6] A non-aqueous electrolyte secondary battery electrode composition, including: the non-aqueous electrolyte secondary battery electrode binder according to [1] or [2]; and a silicon-based compound,
[7] A non-aqueous electrolyte secondary battery electrode, which uses the non-aqueous electrolyte secondary battery electrode composition according to [6], and
[8] A non-aqueous electrolyte secondary battery, which uses the non-aqueous electrolyte secondary battery electrode composition according to [6]
   are provided.

### Advantageous Effects of Invention

According to the present invention, it is possible to obtain a non-aqueous electrolyte secondary battery electrode binder having excellent battery characteristics and film characteristics. Also, it is possible to obtain a non-aqueous electrolyte secondary battery electrode composition, a non-aqueous electrolyte secondary battery electrode, and a non-aqueous electrolyte secondary battery, which use the non-aqueous electrolyte secondary battery electrode binder.

### Description of Embodiments

Hereinafter, a non-aqueous electrolyte secondary battery electrode binder (hereinafter, it may be referred to as an "electrode binder") of the present invention will be described. An electrode binder of the present invention at least includes: carboxymethyl cellulose and/or a salt thereof having a degree of carboxymethyl substitution per anhydroglucose unit of 0.5 to 1.2 and a viscosity of a 1% by mass aqueous solution measured with a B-type viscometer (30 rpm) at 25°C of 1,000 to 20,000 mPa·s; and a lithium borate salt.

### <Carboxymethyl cellulose or salt thereof>

In the present invention, carboxymethyl cellulose or a salt thereof has a structure in which a hydroxyl group in a glucose residue constituting cellulose is substituted with a carboxymethyl ether group. The carboxymethyl cellulose may be in the form of a salt. Examples of the salt of carboxymethyl cellulose include metal salts such as carboxymethyl cellulose sodium salt.

In the present invention, cellulose means a polysaccharide having a structure in which D-glucopyranose (also simply referred to as "glucose residue" or "anhydroglucose") is linked by β,1-4 bonds. Cellulose is generally classified into natural cellulose, regenerated cellulose, fine cellulose, microcrystalline cellulose excluding an amorphous region, and the like from the origin, a production method, and the like.

Examples of the natural cellulose include bleached pulp and unbleached pulp (bleached wood pulp or unbleached wood pulp); linters, purified linters; cellulose produced by microorganisms such as acetic acid bacteria, and the like. A raw material of the bleached pulp or the unbleached pulp is not particularly limited, and examples thereof include wood, cotton, straw, and bamboo. In addition, a method for producing the bleached pulp or the unbleached pulp is not particularly limited, and may be a mechanical method, a chemical method, or a method in which two methods are combined in the middle thereof. Examples of the bleached pulp or the unbleached pulp classified by the production method include mechanical pulp, chemical pulp, crushed pulp, sulfite pulp, and kraft pulp. Further, dissolving pulp may be used in addition to pulp for papermaking. The dissolving pulp is chemically purified pulp, and is mainly used by being dissolved in chemicals, and becomes a main raw material for artificial fibers, cellophane, and the like.

Examples of the regenerated cellulose include regenerated cellulose obtained by dissolving cellulose in any solvent such as a copper ammonia solution, a cellulose xanthate solution, or a morpholine derivative, and spinning the cellulose again.

Examples of the fine cellulose include fine cellulose obtained by depolymerizing (for example, acid hydrolysis, alkaline hydrolysis, enzymatic decomposition, blasting treatment, vibration ball mill treatment, and the like) a cellulose-based material such as natural cellulose or regenerated cellulose, and fine cellulose obtained by mechanically treating the cellulose-based material.

It is important that the carboxymethyl cellulose or a salt thereof of the present invention has a degree of carboxymethyl substitution per anhydroglucose unit of 0.5 or more and more preferably 0.6 or more. When the degree of carboxymethyl substitution is less than 0.5, there is a concern that dissolution in water becomes insufficient.

In the present invention, the anhydroglucose unit means individual anhydroglucose (glucose residue) constituting cellulose. In addition, the degree of carboxymethyl substitution (also referred to as a degree of etherification) refers to a proportion of those substituted with a carboxymethyl ether group (-OCH₂COOH) among hydroxyl groups (-OH) in glucose residues constituting cellulose. The degree of carboxymethyl substitution may be abbreviated as DS or CM-DS.

An upper limit of the degree of carboxymethyl substitution per anhydroglucose unit of the carboxymethyl cellulose or a salt thereof is preferably 1.2 or less, and more preferably 1.0 or less.

The degree of carboxymethyl substitution can be confirmed by measuring the amount of a base such as sodium hydroxide required for neutralizing carboxymethyl cellulose in a sample. In this case, in a case where the carboxymethyl ether group of the carboxymethyl cellulose or a salt thereof is in a form of a salt, the salt is converted into carboxymethyl cellulose in advance before measurement. In the measurement, a back titration using a base or an acid and an indicator such as phenolphthalein can be appropriately combined.

In the present invention, the carboxymethyl cellulose or a salt thereof preferably has a viscosity of a 1% by mass aqueous solution measured with a B-type viscometer (30 rpm) at 25°C of 1,000 to 20,000 mPa·s, more preferably 1,500 to 15,000 mPa·s, and still more preferably 1,500 to 10,000 mPa·s. When the viscosity is within the above range, an electrode slurry that does not easily settle and has good coatability can be prepared, and thus it is suitable for a non-aqueous electrolyte secondary battery.

Also, regarding the carboxymethyl cellulose or a salt thereof, in a case where a dry mass of a residue on a filter when 2 liters of a 0.3% by mass aqueous solution of the carboxymethyl cellulose or a salt thereof is entirely filtered through a 250 mesh filter under a reduced pressure condition of -200 mmHg is defined as mass M, and a mass of the carboxymethyl cellulose or a salt thereof dissolved in the aqueous solution is defined as mass m, a ratio of mass M to mass m is preferably less than 50 ppm. When the ratio is 50 ppm or more, when an electrode is formed using the carboxymethyl cellulose or a salt thereof, there are concerns that external appearance defects such as streaks or pinholes may occur in the electrode and a quality of a battery may deteriorate. A lower limit of the ratio of the mass M to the mass m is not particularly limited, and the smaller the ratio, the better.

In the present invention, a method for producing the carboxymethyl cellulose or a salt thereof is not limited, and a known method for producing carboxymethyl cellulose or a salt thereof can be applied. That is, the carboxymethyl cellulose or a salt thereof of the present invention can be produced by treating cellulose as a raw material with a mercerizing agent (alkali) to prepare mercerized cellulose (alkali cellulose), and then adding an etherifying agent to the mercerized cellulose to cause an etherification reaction.

As the cellulose as a raw material, the above-mentioned cellulose can be used without particular limitation, and a cellulose having a high cellulose purity is preferable, and in particular, dissolving pulp and linters are preferably used. By using these, carboxymethyl cellulose or a salt thereof with high purity can be obtained.

As the mercerizing agent, alkali metal hydroxide salts or the like such as sodium hydroxide and potassium hydroxide can be used. As the etherifying agent, monochloroacetic acid, sodium monochloroacetate, or the like can be used.

In a case of a general method for producing a water-soluble carboxymethyl cellulose, a molar ratio of the mercerizing agent and the etherifying agent is generally 2.00 to 2.45 in a case where monochloroacetic acid is used as the etherifying agent. The reason is that when the ratio is less than 2.00, there is a possibility that the etherification reaction will not be performed sufficiently, so that there is a possibility that unreacted monochloroacetic acid may remain and waste may occur, and when the ratio exceeds 2.45, there is a concern that a side reaction due to excess mercerizing agent and monochloroacetic acid may proceed to produce an alkali metal glycolate salt, so that there is a possibility that it may be uneconomical.

In the present invention, a commercially available carboxymethyl cellulose or a salt thereof may be used as it is, or may be used after being treated as necessary. Examples of the commercially available products include "SUNROSE" (sodium salt of carboxymethyl cellulose) manufactured by Nippon Paper Industries Co., Ltd.

### [Pulverization treatment]

In the present invention, regarding the carboxymethyl cellulose or a salt thereof, the carboxymethyl cellulose or a salt thereof as described above may be used as it is, or carboxymethyl cellulose or a salt thereof which has been further subjected to a pulverization treatment (pulverized product) may also be used. The pulverization treatment is a mechanical pulverization treatment usually performed using a machine. Examples of the method for pulverizing the carboxymethyl cellulose or a salt thereof include both a dry pulverization method of treating the carboxymethyl cellulose or a salt thereof in a powder state and a wet pulverization method of treating the carboxymethyl cellulose or a salt thereof in a state of being dispersed or dissolved in a liquid. In the present invention, any of these may be selected.

When an aqueous solution of the carboxymethyl cellulose or a salt thereof is prepared, gel particles derived from the carboxymethyl cellulose or a salt thereof remain as an undissolved substance in the aqueous solution. By subjecting the carboxymethyl cellulose or a salt thereof to a mechanical dry or wet pulverization treatment, in an aqueous solution of a mechanically pulverized product of the carboxymethyl cellulose or a salt thereof, gel particles are micronized. As a result, it is considered that when an electrode is formed using an aqueous solution of a mechanically pulverized product of the carboxymethyl cellulose or a salt thereof, it is possible to further suppress coarse undissolved substances that cause streaky defects (streaks), peeling, pinholes, and the like generated on a surface of an electrode.

Examples of a pulverizer usable for the mechanical pulverization treatment in the present invention include a dry pulverizer and a wet pulverizer as described below.

Examples of the dry pulverizer include a cutting mill, an impact mill, an air flow mill, and a medium mill. Although these can be used singly or in combination and further can be processed in several stages in the same model, an air flow type mill is preferable.

Examples of the cutting mill include a mesh mill (manufactured by Horai Co., Ltd.), Atmos (manufactured by Yamamoto Hyakuma Mfg. Co), a knife mill (manufactured by Pallmann), a granulator (manufactured by Herbold), and a rotary cutter mill (manufactured by Nara Machinery Co., Ltd.).

Examples of the impact mill include a pulverizer (manufactured by Hosokawa Micron Corporation), a fine impact mill (manufactured by Hosokawa Micron Corporation), a super micron mill (manufactured by Hosokawa Micron Corporation), a sample mill (manufactured by Seishin Co., Ltd.), a bantam mill (manufactured by Seishin Co., Ltd.), an atomizer (manufactured by Seishin Co., Ltd.), a tornado mill (Nikkiso Co., Ltd.), a turbo mill (Turbo Kogyo Co., Ltd.), and a beveled impactor (manufactured by Aikawa Iron Works Co., Ltd.).

Examples of the airflow type mill include a CGS type jet mill (manufactured by Mitsui Mining Co., Ltd.), a jet mill (manufactured by Sansho Industry Co., Ltd.), an Ebara jet micronizer (manufactured by Ebara Corporation), a selenium mirror (manufactured by Masuko Sangyo Co., Ltd.), and a supersonic jet mill (manufactured by Nippon Pneumatic Mfg. Co., Ltd.).

Examples of the medium mill include a vibration ball mill.

Examples of the wet pulverizer include Mascolider (manufactured by Masuko Sangyo Co., Ltd.), a high-pressure homogenizer (manufactured by Sanmaru Machine Co., Ltd.), and a medium mill. Examples of the medium mill include a bead mill (manufactured by AIMEX CO., LTD.).

### [Particle size of carboxymethyl cellulose]

In the present invention, a particle size of the carboxymethyl cellulose or a salt thereof is preferably small. That is, in a particle size distribution based on a volume average particle size measured by a laser diffraction/scattering particle size distribution meter using methanol as a dispersion medium, D90 which is a particle size at which 90% of particles are included when integrated from the minimum value (in the present specification, hereinafter, it may be referred to as "D90") is desirably less than 100 µm, more desirably less than 50 µm, and still more desirably less than 45 µm. When the D90 of the carboxymethyl cellulose or a salt thereof is too large, undissolved substances of the carboxymethyl cellulose or a salt thereof in an aqueous solution tends to increase.

In the present invention, the carboxymethyl cellulose or a salt thereof may be subjected to a granulation treatment. This facilitates handling. Although the D90 of the carboxymethyl cellulose or a salt thereof may be equal to or more than the above value by performing the granulation treatment, the D90 of the carboxymethyl cellulose or a salt thereof before the granulation treatment is preferably less than the above value.

A lower limit of the D90 is not particularly limited. A smaller value is more preferable, and may be more than 0.

In the present invention, the carboxymethyl cellulose or a salt thereof can be classified based on a size of the particle size (preferably the size of D90). The classification means a treatment of sieving particles to be classified into particles having a size equal to or larger than a certain particle size and particles having a size equal to or smaller than the certain particle size.

The classification is preferably performed based on whether the D90 is less than the above value or equal to or larger than the above value. This makes it possible to selectively collect the carboxymethyl cellulose or a salt thereof having a D90 of less than the above value.

When a pulverized product of carboxymethyl cellulose or a salt thereof is used as the carboxymethyl cellulose or a salt thereof, the timing of the classification is not particularly limited, and the classification may be provided in the middle of the pulverization treatment or may be provided after the end of the pulverization treatment.

As a classification method, a known method, for example, a method using a dry classifier or a wet classifier may be used. Examples of the dry classifier include a cyclone classifier, a DS separator, a turbo classifier, a microseparator, and an air separator. On the other hand, examples of the wet classifier include a hydrocyclone-type classifier, a centrifugal settler, and a hydroseparator. Among them, a dry classifier is preferable, and a cyclone classifier is more preferable.

### <Borate salt>

It is important that the electrode binder of the present invention contains a borate salt. The borate salt in the present invention is a lithium borate salt.

When such a borate salt is used as the electrode binder, together with the carboxymethyl cellulose, a hydroxy group in the borate salt forms a crosslinked structure with the carboxy group of the carboxymethyl cellulose via a hydrogen bond. Since this crosslinked structure is more excellent in strength as a binder than the carboxymethyl cellulose alone, it is presumed that structural destruction of a coating layer due to expansion and shrinkage of an active material occurring during charging and discharging can be suppressed, leading to an effect of improving battery characteristics.

In addition, when a lithium borate salt is used, boric acid can exhibit neutrality or weak alkalinity when added to the electrode binder. In a case where the boric acid is not in the state of a lithium salt, since an electrode composition as an aqueous solution becomes strongly acidic, the viscosity of the electrode composition decreases or the polarity is unevenly distributed, and thus unevenness occurs when the electrode composition is applied to the current collector, which is not preferable. Furthermore, when the boric acid is a lithium salt, contamination of impurities is reduced when a lithium-based active material is used, and thus electrical performance is prone to be exhibited.

### <Electrode binder>

It is important that the non-aqueous electrolyte secondary battery electrode binder of the present invention at least contains the carboxymethyl cellulose and/or a salt thereof having the degree of carboxymethyl substitution per anhydroglucose unit of 0.5 to **1.2,** and a lithium borate salt. In such an electrode binder, the lithium borate salt is contained preferably in a range of 0.1% to 20% by mass, more preferably in a range of 0.5% to 15% by mass, and still more preferably in a range of 1% to 10% by mass, based on the carboxymethyl cellulose or a salt thereof. When a mixing ratio is in the range, it is presumed that the formation of the crosslinked structure of the carboxymethyl cellulose and the lithium borate salt described above occurs more effectively.

The electrode binder of the present invention can also be an aqueous solution. A production condition of such an aqueous solution is not particularly limited, and for example, the aqueous solution can be prepared by adding an electrode binder to water (for example, distilled water, purified water, tap water, and the like) and dissolving the electrode binder by stirring or the like as necessary. In addition, the carboxymethyl cellulose or a salt thereof may be dissolved in water or the like, then a lithium borate salt may be added thereto and dissolved by stirring or the like. Similarly, after the lithium borate salt is dissolved in water or the like, the carboxymethyl cellulose or a salt thereof can be dissolved by stirring or the like.

A pH of the aqueous solution of such an electrode binder is preferably in a range of pH 1 to 8, more preferably in a range of pH 2 to 8, still more preferably in a range of pH 3 to 8, and particularly preferably in a range of pH 6 to 8. When the pH of the aqueous solution is biased to the acidic side, it becomes difficult to exhibit the viscosity expected for the aqueous solution. Therefore, when the pH is in the range of 6 to 8, particularly a balance between the viscosity and solubility is achieved and an aqueous solution with excellent coatability can be obtained.

In addition, in the aqueous solution of the electrode binder, the viscosity of the 1% by mass aqueous solution measured with a B-type viscometer (30 rpm) at 25°C is preferably 5 mPa·s or more, and more preferably 250 mPa·s or more, and is preferably 15,000 mPa·s or less, more preferably 10,000 mPa·s or less, and still more preferably 8,000 mPa·s or less. When the aqueous solution of the electrode binder is in the above viscosity range, suitable thickening and binding properties can be exhibited when the electrode binder is added to the electrode composition.

In the electrode binder of the present invention, other components constituting the electrode composition can be added as long as the effect of the present invention is not impaired. Examples of such an additive component include an inorganic salt that is positively ionized in an aqueous solution. When cations are mixed, the crosslinked structure of the carboxymethyl cellulose is reinforced, so that an effect excellent in electrical properties can be exhibited. As such cations, cations such as monovalent, divalent, and trivalent cations can be appropriately used, and specifically, cations containing Fe ions and the like are preferable.

### <Electrode composition>

The electrode binder of the present invention can constitute an electrode composition together with an active material of an electrode. A property of the electrode composition is not particularly limited, and may be either a slurry form or a paste form.

In the present invention, the content of the carboxymethyl cellulose or a salt thereof in the electrode composition is preferably 0.1% to 4.0% by mass with respect to the entire electrode composition.

The electrode composition may contain various components depending on whether the electrode formed by the composition is a negative electrode or a positive electrode.

In a case of an electrode composition for a negative electrode, a negative electrode active material is usually contained. Examples of the negative active material include a graphite material such as graphite (natural graphite or artificial graphite), coke, and a carbon fiber; a compound containing an element capable of forming an alloy with lithium, that is, an element such as Al, Si, Sn, Ag, Bi, Mg, Zn, In, Ge, Pb, or Ti; a composite product of an element capable of forming an alloy with the lithium, the compound, and carbon and/or the graphite material; and a nitride containing lithium can be used. Among them, a graphite material and/or a silicon-based compound is preferable, graphite and/or a silicon-based compound is more preferably contained, and at least a silicon-based compound is preferably contained.

In a case of an electrode composition for a positive electrode, a positive electrode active material is usually contained. As the positive active material, LiMeₓO_{y} (Me means a transition metal containing at least one of Ni, Co, and Mn, x and y mean arbitrary number) based positive electrode active material is preferable. The LiMeₓO_{y}-based positive electrode active material is not particularly limited, and LiMn₂O₄-based, LiCoO₂-based, and LiNiO₂-based positive electrode active materials are preferable. Examples of the LiMn₂O₄-based, LiCoO₂-based, and LiNiO₂-based positive electrode active materials include compounds with LiMnO₂, LiMn₂O₄, LiCoO₂, or LiNiO₂ as a main skeleton, and substituted with various metal elements. Since the LiMn₂O₄-based, LiCoO₂-based, and LiNiO₂-based positive electrode active materials have excellent performance as a positive electrode active material such as excellent diffusion performance of electrons and lithium ions, a lithium ion secondary battery having high charge-discharge efficiency and good cycle characteristics can be obtained. Among them, a LiCoO₂-based positive electrode active material is preferable, and LiCoO₂ is more preferable. On the other hand, from the viewpoint of low material cost, it is preferable to use a LiMn₂O₄-based positive electrode active material.

The content of the active material in the electrode composition is usually 90% to 99% by mass, preferably 91% to 99% by mass, and more preferably 92% to 99% by mass.

In a case of the electrode composition for a positive electrode, the electrode composition preferably has a conductive material. When the electrode composition has a conductive material, the characteristics of the positive electrode to be produced are improved. In addition, the conductive material can ensure the electrical conductivity of the positive electrode. Examples of the conductive material include one kind or a mixture of two or more kinds of carbon substances such as carbon black, acetylene black, and graphite. Among them, carbon black is preferable.

In addition, the electrode composition may contain a binder in addition to the aqueous solution of the carboxymethyl cellulose or salt thereof. Examples of the binder in a case of the electrode composition for a negative electrode include a synthetic rubber-based binder. As the synthetic rubber-based binder, one or more selected from the group consisting of styrene butadiene rubber (SBR), nitrile butadiene rubber, methyl methacrylate butadiene rubber, chloroprene rubber, carboxy-modified styrene butadiene rubber, and latexes of these synthetic rubbers can be used. Among them, styrene-butadiene rubber (SBR) is preferable. In addition, examples of the binder in a case of the electrode composition for a positive electrode include polytetrafluoroethylene (PTFE) in addition to the synthetic rubber-based binder mentioned as the binder for a negative electrode, and among them, polytetrafluoroethylene (PTFE) is preferable.

The content of the binder in the electrode composition is usually 0.5% to 5% by mass, preferably 0.5% to 3% by mass, and more preferably 0.5% to 2% by mass.

A production condition of the electrode composition is not particularly limited. For example, other components constituting the electrode composition are added to the aqueous solution of the carboxymethyl cellulose or a salt thereof, and mixed with stirring as necessary.

A property of the electrode composition is also not particularly limited. Examples thereof include a liquid form, a paste form, a slurry form, and the like, and any form may be used.

The electrode composition is used for manufacturing an electrode for a non-aqueous electrolyte secondary battery. The electrode for a non-aqueous electrolyte secondary battery may be produced by a method of laminating the electrode composition on a current collecting substrate (current collector). Examples of the lamination method include blade coating, bar coating, and die coating, and blade coating is preferable. For example, in a case of blade coating, a method of casting an electrode composition on a current collecting substrate using a coating device such as a doctor blade is exemplified. In addition, the lamination method is not limited to the above specific example, and examples thereof include a method in which the electrode composition is discharged and applied onto a current collecting substrate wound around and traveling a backup roll by an extrusion-type liquid injector having a slot nozzle. In blade coating, after casting, drying by heating (at a temperature of, for example, 80°C to 120°C, for a heating time of, for example, 4 to 12 hours) or the like, and pressurization by roll pressing or the like can be further performed as necessary.

Any electric conductor that does not cause a fatal chemical change in a configured battery can be used as the current collecting substrate.

As the current collecting substrate for a negative electrode active material, stainless steel, nickel, copper, titanium, carbon, copper, or a material obtained by applying carbon, nickel, titanium, or silver to a surface of a stainless steel can be used. Among them, copper or a copper alloy is preferable, and copper is most preferable.

Examples of the material of the current collecting substrate for a positive electrode include metals such as aluminum and stainless steel, and aluminum is preferable. As a shape of the current collecting substrate, a net, a punched metal, a foam metal, a foil processed into a plate shape, or the like can be used, and a foil processed into a plate shape is preferable.

The shape of the non-aqueous electrolyte secondary battery electrode formed of the electrode composition is not particularly limited, but is usually a sheet shape. A thickness (thickness of a composite layer formed from electrode composition, excluding a current collecting substrate portion) in a case of a sheet-like electrode plate is difficult to define unambiguously because it is appropriately selected depending on a composition of the composition, a production condition, or the like, but the thickness is usually 30 to 150 µm.

An electrode formed of the composition is used as an electrode of a non-aqueous electrolyte secondary battery. That is, according to the present invention, it is possible to provide an electrode formed of the composition, and produce a non-aqueous electrolyte secondary battery using the electrode. The non-aqueous electrolyte secondary battery can have a structure in which positive electrodes and negative electrodes are alternately laminated with a separator interposed therebetween and wound many times. The separator is usually impregnated with a nonaqueous electrolyte.

As the negative electrode and/or the positive electrode, a negative electrode and/or a positive electrode formed of the electrode composition described above can be used. In such a non-aqueous electrolyte secondary battery, the carboxymethyl cellulose or a salt thereof having excellent solubility is used, and a step such as filtration by a filter can be omitted, so that the non-aqueous electrolyte secondary battery is excellent in productivity, an initial irreversible capacity is remarkably improved, and high battery characteristics can be exhibited.

### Examples

Hereinafter, embodiments of the present invention will be described with reference to examples, but the present invention is not limited thereto.

In the present examples and comparative examples, the measurement of each index for carboxymethyl cellulose or a salt thereof is performed by the following method.

### <Method for measuring degree of carboxymethyl substitution (CM-DS)>

About 2.0 g of a sample of a carboxymethyl cellulose pulverized product was precisely weighed and put into a 300 mL Erlenmeyer flask with stopper. 100 mL of methanol (solution obtained by adding 100 mL of special grade concentrated nitric acid to 1000 mL of methanol) was further added, and a mixture was shaken for 3 hours to convert a carboxymethyl cellulose salt (CMC salt) into H-CMC (carboxymethyl cellulose). 1.5 to 2.0 g of absolute dry H-CMC was precisely weighed and put into a 300 mL Erlenmeyer flask with stopper. The H-CMC was wetted with 15 mL of 80% methanol, 100 mL of 0.1 N NaOH was added, and the mixture was shaken at room temperature for 3 hours. Excess NaOH was back-titrated with 0.1 N H₂SO₄ using phenolphthalein as an indicator. The CM-DS was calculated by the following Equation 1.$\begin{matrix}A = \left[\left(100\times F-\left(0.1 N H2{SO}_{4}\left(mL\right)\right)\times F'\right)\times 0.1\right] / \left(\begin{matrix}Absolute dry \\ mass of H - CMC \left(g\right)\end{matrix}\right) \\ Degree of carboxylmethyl substitution \left(CM-DS\right) = 0.162 \times A / \left(\begin{matrix}1 - \\ 0.058 \times A\end{matrix}\right)\end{matrix}$ (Equation 1)
A: 1 N NaOH amount (mL) required to neutralize 1 g of H-CMC
F': Factor of 0.1 N H₂SO₄
F: Factor of 0.1 N NaOH

### <Viscosity>

Carboxymethylated cellulose or a salt thereof was weighed in a 1000 mL glass beaker and dispersed in 900 mL of distilled water to prepare an aqueous dispersion having a solid content of 1% (w/v). The aqueous dispersion was stirred at 25°C using a stirrer at 600 rpm for 3 hours. Thereafter, according to the method of JIS-Z-8803, a viscosity after 3 minutes at No. 1 rotor/rotation speed of 30 rpm was measured using a B-type viscometer (manufactured by Toki Sangyo Co., Ltd.).

### <Measurement of mass ratio of mass of filtration residue to dry mass of carboxymethyl cellulose dissolved in aqueous solution>

2 liters of an aqueous solution containing 0.3% by mass of carboxymethyl cellulose or a salt thereof (% by mass based on the dry mass of carboxymethyl cellulose or a salt thereof) was prepared. 2 liters of the aqueous solution was filtered through a 250 mesh filter (made of stainless steel and having mesh size of 63 µm) using a filter ("Sepa-Rohto" manufactured by Kiriyama glass. CO.) under a reduced pressure of -200 mmHg. The residue remaining on the 250 mesh filter was air-blown and dried at a temperature of 105°C for 16 hours, and then the mass of the dried residue was measured and expressed as mass percent (ppm) with respect to the mass of the carboxymethyl cellulose in a carboxymethyl cellulose aqueous solution.

### <Measurement of D90>

The particle size distribution was measured using a laser diffraction/scattering type particle size distribution analyzer (Mastersizer 2000E, manufactured by Spectris Corporation). In the measurement, the sample was dispersed in methanol and then subjected to ultrasonic treatment for at least 1 minute or more, and the measurement was performed.

### <Peeling test>

The negative electrode plates obtained in examples and comparative examples were cut into a width of 35 mm and a length of 300 mm to obtain a peeling test piece. An adhesive tape (polyester adhesive tape manufactured by Nitto Denko Corporation, width 30 mm, length 300 mm, and thickness 25 µm) was caused to adhere to the uppermost layer of a surface of the peeling test piece on the active material layer side at 280 kgf/cm so as to be at the center of the peeling test piece.

Thereafter, a copper foil side of the peeling test piece was stuck and fixed to a wood plate with a general double-sided tape, and set in a Tensilon universal material tester (TENSILON RTC-1210A manufactured by A & D Company, Limited). The tape was mechanically peeled off for 20 mm from the peeling test piece to perform measurement preparation, and then the peeling strength was measured under conditions of a load speed of 100 mm/min and a maximum load of 10 N at 180 degrees.

In addition, an evaluation of a film was performed on the electrode binders 1 to 9 obtained in examples and comparative examples.

### <Evaluation of film of electrode binder>

### (Filming of electrode binder)

The obtained electrode binders 1 to 9 were each adjusted so as to have a solid content concentration of carboxymethyl cellulose of 1% (w/v), then glycerol was added so as to have a solid content of 50% by mass with respect to the carboxymethyl cellulose, and a mixture was stirred well until being dissolved.

Subsequently, defoaming was performed using a mazerustar (KK-250S manufactured by KURABO INDUSTRIES LTD.), 80 g of the mixture was poured into a polytetrafluoroethylene petri dish having a diameter of 14 cm, and was caused to flow over the entire surface of the petri dish so that air bubbles did not enter the petri dish, and then the mixture was dried at 30°C for 30 hours using a blower dryer to obtain films 1 to 9 of the electrode binders 1 to 9.

### (Evaluation of film)

The obtained films 1 to 9 were allowed to stand still in a room maintained at room temperature of 23°C and a humidity of 50% to adjust the humidity for one day and night, and cut into a width of **1.5** cm, and then subjected to a tensile test with a Tensilon universal tester. The test was performed under conditions of a distance between samples of 5 cm and a speed of 1 cm/min, and breaking strength, tensile strength, elongation and elongation percentage correlated with the coating film strength were obtained. For the film 9 produced using the electrode binder **9,** the film strength was weak, and the breaking strength, tensile strength, elongation and elongation percentage could not be measured.

Also, using coin-type non-aqueous electrolyte secondary batteries obtained in Examples and Comparative Examples, the batteries were evaluated as follows.

### <Evaluation of battery>

### (Discharge capacity (charge-discharge rate test))

For the charge/discharge rate test of the coin-type non-aqueous electrolyte secondary batteries obtained in examples and comparative examples, BTS2004 manufactured by Nagano **Co.,** Ltd. was used, and 52 cycles were performed in a thermostatic bath at 25°C using the coin-type non-aqueous electrolyte secondary battery, with charge and discharge performed in the order of a charge treatment and a discharge treatment as one cycle. As a condition of the charge treatment, a constant current constant voltage (CC-CV) method (CC current 0.2 C, CV voltage 4.2 V, and termination current 0.02 C) was used in all cycles.

As a condition of the discharge treatment, the termination voltage was set to 3.0 V. In the first one cycle, the constant current of the discharge treatment was performed at 0.2 C, and the discharge capacity (mAh/g) after the 1st cycle was measured after the discharge.

Until the 52th cycle thereafter, a constant current of the discharge treatment was set as described below, and a discharge capacity (mAh/g) was measured after discharge in each cycle.

### (Constant current of discharge treatment in each cycle)

2nd to 10th cycles: Constant current of discharge treatment of 0.2 C
11th to 20th cycles: Constant current of discharge treatment of 1C
21st cycle: Constant current of discharge treatment of 0.2 C
22nd to 31st cycles: Constant current of discharge treatment of 2 C
32nd cycle: Constant current of discharge treatment of 0.2 C
33th to 42nd cycles: Constant current of discharge treatment of 3 C
43th to 52nd cycles: Constant current of discharge treatment of 0.2 C

### (Capacity retention rate)

A capacity retention rate is calculated from the discharge capacity (mAh/g) in each cycle test described above, by using the Equation "Capacity retention rate = discharge capacity (mAh/g) after 1st cycle/Discharge capacity (mAh/g) after 52nd cycles × 100".

### (Example 1)

### <Preparation of electrode binder>

A solution obtained by dissolving 2720 g of isopropyl alcohol, 170 g of Na monochloroacetate, and 58 g of sodium hydroxide in 480 g of water was added to a biaxial kneader whose rotation speed was adjusted to 100 rpm, and 160 g of linter pulp in terms of dry mass when dried at 30°C for 60 minutes was added thereto. The mixture was stirred and mixed at 30°C for 90 minutes to prepare mercerized cellulose, and then the temperature was raised to 70°C to perform a carboxymethylation reaction for 90 minutes. After completion of the reaction, the reaction mixture was neutralized with acetic acid so as to have a pH of about 7, and dehydrated, dried, and pulverized to obtain a sodium salt of carboxymethyl cellulose (hereinafter, it may be referred to as "CMC1") having a degree of carboxymethyl substitution of 0.70, a viscosity of a 1% by mass aqueous solution measured with a B-type viscometer at 25°C of 7,900 mPa·s, a filtration residue with respect to a dry mass of carboxymethyl cellulose dissolved in the aqueous solution of 48 ppm, and a D90 of 31.9 µm. The above-mentioned carboxymethyl cellulose sodium salt and 1% by mass of lithium tetraborate (manufactured by FUJIFILM Wako Pure Chemical Corporation) based on the carboxymethyl cellulose sodium salt were weighed in a 300 mL glass beaker, and distilled water was added thereto such that a solid concentration of carboxymethyl cellulose was 2% (w/v) to prepare an aqueous dispersion. The aqueous dispersion was stirred using a stirrer at 25°C and 500 rpm for 2 hours to obtain an electrode binder 1.

### <Production of negative electrode plate>

SiOₓ, acetylene black (manufactured by Stream Chemical Co., Ltd.), the electrode binder 1, and styrene-butadiene rubber (SBR, manufactured by JSR Corporation, product number: S2910(E)-12-Na) as negative electrode materials were mixed at a solid content mass ratio of 97:0.5:1.0:1.5, water was added such that a slurry concentration was 45.6% by mass, and the mixture was sufficiently stirred using a mazerustar (KK-250S manufactured by KURABO INDUSTRIES LTD.) to obtain a slurry 1. This slurry was applied to a copper foil (NC-WS manufactured by Furukawa Electric Co., Ltd.) having a length of 320 mm × a width of 170 mm × a thickness of 17 µm by an applicator and air-dried for 30 minutes, and then dried at 60°C for 30 minutes by a dryer. Further, pressing was performed under conditions of a roll circumferential speed of 50 m/min at 5 kN using a small tabletop roll press (SA-602 manufactured by Tester Sangyo Co., Ltd.) to obtain a negative electrode plate 1 having a basis weight of 19.7 g/m² and an effective discharge capacity of 2100 mAh/g.

### <Preparation of coin-type non-aqueous electrolyte secondary battery>

The obtained negative electrode plate 1 and a LiCoO₂ positive electrode plate (manufactured by Hohsen Corporation, basis weight: 110.2 g/m², discharge effective capacity: 145 mAh/g) were punched into a circle having a diameter of 16 mm, and the punched negative electrode plate and positive electrode plate were vacuum-dried at 120°C for 12 hours.

Similarly, a separator (polypropylene separator with a thickness of 20 µm manufactured by CS Tech) was punched into a circle having a diameter of 17 mm, and vacuum-dried at 60°C for 12 hours.

Thereafter, the negative electrode plate 1 was placed in a stainless steel circular dish type container having a diameter of 20.0 mm, then a separator, a positive electrode plate, a spacer (diameter of 15.5 mm, thickness of 1 mm) and a stainless steel washer (manufactured by Hohsen Corporation) were laminated in this order, and then 300 µL of an electrolytic solution (1 mol/L of LiPF₆, volume ratio of ethylene carbonate to diethyl carbonate of 1:1) was added to the circular dish type container. This was covered with a stainless steel cap via a polypropylene packing, and sealed with a coin battery crimping machine (Hohsen Corporation) to obtain a coin-type non-aqueous electrolyte secondary battery 1.

### (Example 2 - not part of the invention)

The electrode binder 2 was obtained in the same manner as in Example 1 except that sodium tetraborate (manufactured by FUJIFILM Wako Pure Chemical Corporation) was used instead of the lithium tetraborate in an amount of 10% by mass based on the carboxymethyl cellulose sodium salt.

A slurry, a negative electrode plate, and a coin-type non-aqueous electrolyte secondary battery were produced in the same manner as in Example 1 except that the electrode binder 2 was used instead of the electrode binder 1.

### (Example 3)

The electrode binder 3 was obtained in the same manner as in Example 1 except that the type of CMC was changed to a sodium salt of carboxymethyl cellulose having a degree of carboxymethyl substitution of 0.90, a viscosity of a 1% by mass aqueous solution measured with a B-type viscometer at 25°C of 1,890 mPa·s, a filtration residue with respect to a dry mass of carboxymethyl cellulose dissolved in the aqueous solution of 40 ppm, and a D90 of 27.4 µm.

A slurry, a negative electrode plate, and a coin-type non-aqueous electrolyte secondary battery were produced in the same manner as in Example 1 except that the electrode binder 3 was used instead of the electrode binder 1.

### (Comparative Example 1)

The electrode binder 4 was obtained in the same manner as in Example 1 except that no borate salt was added. In addition, a slurry, a negative electrode plate, and a coin-type non-aqueous electrolyte secondary battery were produced in the same manner as in Example 1 except that the electrode binder 4 was used instead of the electrode binder 1.

### (Comparative Example 2)

The electrode binder 5 was obtained in the same manner as in Example 1 except that boric acid (manufactured by FUJIFILM Wako Pure Chemical Corporation) was used instead of the borate salt in an amount of 10% by mass based on the carboxymethyl cellulose sodium salt. A slurry, a negative electrode plate, and a coin-type non-aqueous electrolyte secondary battery were produced in the same manner as in Example 1 except that the electrode binder 5 was used instead of the electrode binder 1.

### (Comparative Example 3)

The electrode binder 6 was obtained in the same manner as in Example 1 except that the type of CMC was changed to a sodium salt of carboxymethyl cellulose having a degree of carboxymethyl substitution of 0.75, a viscosity of a 1% by mass aqueous solution measured with a B-type viscometer at 25°C of 10 mPa·s, a filtration residue with respect to a dry mass of carboxymethyl cellulose dissolved in the aqueous solution of 210 ppm, and a D90 of 108.2 µm.

A slurry, a negative electrode plate, and a coin-type non-aqueous electrolyte secondary battery were produced in the same manner as in Example 1 except that the electrode binder 6 was used instead of the electrode binder 1.

### (Comparative Example 4)

The electrode binder 7 was obtained in the same manner as in Example 1 except that the type of CMC was changed to a sodium salt of carboxymethyl cellulose having a degree of carboxymethyl substitution of 0.69, a viscosity of a 1% by mass aqueous solution measured with a B-type viscometer at 25°C of 100 mPa·s, a filtration residue with respect to a dry mass of carboxymethyl cellulose dissolved in the aqueous solution of 216 ppm, and a D90 of 96.4 µm.

A slurry, a negative electrode plate, and a coin-type non-aqueous electrolyte secondary battery were produced in the same manner as in Example 1 except that the electrode binder 7 was used instead of the electrode binder 1.

### (Comparative Example 5)

The electrode binder 8 was obtained in the same manner as in Example 1 except that the type of CMC was changed to a sodium salt of carboxymethyl cellulose having a degree of carboxymethyl substitution of 0.68, a viscosity of a 1% by mass aqueous solution measured with a B-type viscometer at 25°C of 550 mPa·s, a filtration residue with respect to a dry mass of carboxymethyl cellulose dissolved in the aqueous solution of 227 ppm, and a D90 of 95.6 µm.

A slurry, a negative electrode plate, and a coin-type non-aqueous electrolyte secondary battery were produced in the same manner as in Example 1 except that the electrode binder 8 was used instead of the electrode binder 1.

### (Comparative Example 6)

The electrode binder 9 was obtained in the same manner as in Example 1 except that polyacrylic acid (manufactured by Sigma-Aldrich Co. LLC.) (Hereinafter, it may be referred to as "PAA") was used instead of CMC. A slurry, a negative electrode plate, and a coin-type non-aqueous electrolyte secondary battery were produced in the same manner as in Example 1 except that the electrode binder 9 was used instead of the electrode binder 1.

The measurement and evaluation results in examples and comparative examples are shown in Table 1 below.

**[Table 1]**

| | Prescription | | | | | | Film characteristics | | | | Peeling strength | Battery capacity | | Capacity retention rate |
|---|---|---|---|---|---|---|---|---|---|---|---|---|---|---|
| | Binder | | | | | | Breaking strength | Tensile strength | Elongation | Elongation percentage | Peeling strength | Before test | After 52 cycles | % |
| | CMC | | | | Cross linking agent | | | | | | | | | |
| | DS | 1% viscosity (mPa·s) | Mass of residue (ppm) | D90 (*µ*m) m) | Kind | Addition amount | N | kN/m | mm | % | (kN/m) | mAh/g | mAh/g | |
| Example 1 | 0.70 | 7900 | 48 | 31.9 | Lithium tetraborate | 1% based on CMC | 24.0 | 1.6 | 23.3 | 46.7 | 0.98 | 1222 | 824 | 67 |
| Example 2 | 0.70 | 7900 | 48 | 31.9 | Sodium tetraborate | 10% based on CMC | 16.1 | 1.1 | 22.0 | 44.0 | 1.23 | 1208 | 855 | 71 |
| Example 3 | 0.90 | 1890 | 40 | 27.4 | Lithium tetraborate | 1% based on CMC | 36.2 | 2.4 | 23.7 | 47.3 | 1.00 | 1237 | 794 | 64 |
| Comparative Example 1 | 0.70 | 7900 | 48 | 31.9 | - | - | 17.3 | 1.2 | 20.3 | 40.4 | 0.87 | 1122 | 115 | 10 |
| Comparative Example 2 | 0.70 | 7900 | 48 | 31.9 | Boric acid | 10% based on CMC | 20.1 | 1.3 | 19.5 | 38.9 | 0.47 | 1295 | 108 | 8 |
| Comparative Example 3 | 0.75 | 10 | 210 | 108.2 | Lithium tetraborate | 1% based on CMC | 13.1 | 0.9 | 17.4 | 34.8 | 0.47 | 1266 | 184 | 15 |
| Comparative Example 4 | 0.69 | 100 | 216 | 96.4 | Lithium tetraborate | 1% based on CMC | 19.4 | 1.3 | 18.2 | 36.5 | 0.92 | 1238 | 137 | 11 |
| Comparative Example 5 | 0.68 | 550 | 227 | 95.6 | Lithium tetraborate | 1% based on CMC | 24.2 | 1.6 | 14.6 | 29.1 | 1.06 | 1286 | 211 | 16 |
| Comparative Example 6 | (Using PAA instead of CMC) | | | - | Lithium tetraborate | 1% based on PAA | Cannot be measured | Cannot be measured | Cannot be measured | Cannot be measured | 1.37 | 873 | 60 | 7 |

As shown in Table 1, a non-aqueous electrolyte secondary battery electrode binder, at least including: carboxymethyl cellulose and/or a salt thereof having a degree of carboxymethyl substitution per anhydroglucose unit of 0.5 to 1.2 and a viscosity of a 1% by mass aqueous solution measured with a B-type viscometer (30 rpm) at 25°C of 1,000 to 20,000 mPa·s; and a borate salt had excellent film properties, and a non-aqueous electrolyte secondary battery using an electrode binder for a negative electrode plate had an excellent capacity retention rate.

## Claims

1. A non-aqueous electrolyte secondary battery electrode binder, comprising at least: carboxymethyl cellulose and/or a salt thereof having a degree of carboxymethyl substitution per anhydroglucose unit of 0.5 to 1.2 and a viscosity of a 1% by mass aqueous solution measured with a B-type viscometer, 30 rpm, at 25°C of 1,000 to 20,000 mPa·s; and a lithium borate salt.

2. The non-aqueous electrolyte secondary battery electrode binder according to claim 1, wherein the lithium borate salt is contained in a range of 0.1% to 20% by mass with respect to 100% by mass of a solid content of the carboxymethyl cellulose or the salt thereof.

3. The non-aqueous electrolyte secondary battery electrode binder according to claim 1 or 2,wherein when 2 liters of a 0.3% by mass aqueous solution of the carboxymethylated cellulose or the salt thereof having dry mass B is prepared, and entirely filtered through a 250 mesh filter under a reduced pressure condition of -200 mmHg, and dry mass A of a residue on the filter after filtration is measured, the carboxymethylated cellulose or the salt thereof has a ratio of the dry mass A to the dry mass B of less than 50 ppm.

4. The non-aqueous electrolyte secondary battery electrode binder according to claim 1 or 2, wherein the lithium borate salt is lithium tetraborate.

5. The binder for an electrode of a non-aqueous electrolyte secondary battery according to claim 1 or 2, wherein the carboxymethyl cellulose or the salt thereof has a D90 of less than 100 µm**,** the D90 being a particle size at which 90% of particles are included when integrated from a minimum value, in a particle size distribution based on a volume average particle size measured by a laser diffraction/scattering particle size distribution meter using methanol as a dispersion medium.

6. A non-aqueous electrolyte secondary battery electrode composition, comprising: the non-aqueous electrolyte secondary battery electrode binder according to claim 1 or **2;** and a silicon-based compound.

7. A non-aqueous electrolyte secondary battery electrode, which uses the non-aqueous electrolyte secondary battery electrode composition according to claim **6.**

8. A non-aqueous electrolyte secondary battery, which uses the non-aqueous electrolyte secondary battery electrode composition according to claim 6.

## Patentansprüche

1. Bindemittel für eine Elektrode von Sekundärbatterien mit nichtwässrigem Elektrolyten, umfassend mindestens: Carboxymethylcellulose und/oder ein Salz davon, das einen Carboxymethylsubstitutionsgrad pro Anhydroglucoseeinheit von 0,5 bis 1,2 aufweist und eine Viskosität einer 1-Masseprozentigen, wässrigen Lösung, gemessen mit einem Viskosimeter vom Typ B, 30 U/min, bei 25 °C, von 1.000 bis 20.000 mPa·s aufweist; und ein Lithiumboratsalz.

2. Bindemittel für eine Elektrode von Sekundärbatterien mit nichtwässrigem Elektrolyten nach Anspruch 1, wobei das Lithiumboratsalz in einem Bereich von 0,1 bis 20 Masseprozent, bezogen auf 100 Masseprozent des Feststoffgehalts der Carboxymethylcellulose oder des Salzes davon, enthalten ist.

3. Bindemittel für eine Elektrode von Sekundärbatterien mit nichtwässrigem Elektrolyten nach Anspruch 1 oder 2, wobei, wenn 2 Liter einer 0,3-Masseprozentigen Lösung der carboxymethylierten Cellulose oder ihres Salzes mit einer Trockenmasse B hergestellt und unter einem verringerten Unterdruck von -200 mmHg vollständig durch einen 250-Mesh-Filter filtriert werden, und eine Trockenmasse A eines Rückstands auf dem Filter nach der Filtration gemessen wird, die carboxymethylierte Cellulose oder deren Salz ein Verhältnis der Trockenmasse A zur Trockenmasse B von weniger als 50 ppm aufweist.

4. Bindemittel für eine Elektrode von Sekundärbatterien mit nichtwässrigem Elektrolyten nach Anspruch 1 oder 2, wobei das Lithiumboratsalz Lithiumtetraborat ist.

5. Bindemittel für eine Elektrode von Sekundärbatterien mit nichtwässrigem Elektrolyten nach Anspruch 1 oder 2, wobei die Carboxymethylcellulose oder deren Salz einen D90-Wert von weniger als 100 µm aufweist, wobei der D90-Wert eine Partikelgröße ist, die 90 % der Partikel umfasst, wenn in einer Partikelgrößenverteilung - basierend auf einem Volumenmittelwert der Partikelgröße, gemessen mit einem Laserbeugungs-/Laserstreuungs-Partikelgrößenmessgerät unter Verwendung von Methanol als ein Dispersionsmedium - vom Minimalwert ausgehend integriert wird.

6. Elektrodenzusammensetzung für eine Sekundärbatterie mit nichtwässrigem Elektrolyten, umfassend: das Bindemittel für eine Elektrode von Sekundärbatterien mit nichtwässrigem Elektrolyten nach Anspruch 1 oder 2; und eine Verbindung auf Siliziumbasis.

7. Elektrode für eine Sekundärbatterie mit nichtwässrigem Elektrolyten, die die Elektrodenzusammensetzung für eine Sekundärbatterie mit nichtwässrigem Elektrolyten nach Anspruch 6 verwendet.

8. Sekundärbatterie mit nichtwässrigem Elektrolyten, die die Elektrodenzusammensetzung für eine Sekundärbatterie mit nichtwässrigem Elektrolyten nach Anspruch 6 verwendet.

## Revendications

1. Un liant pour électrode de batterie secondaire à électrolyte non aqueux, comprenant au moins : de la carboxyméthylcellulose et/ou un sel de celle-ci ayant un degré de substitution carboxyméthylique par unité d'anhydroglucose de 0,5 à 1,2 et une viscosité d'une solution aqueuse à 1 % en masse, mesurée à l'aide d'un viscosimètre de type B, 30 tr/min, à 25 °C, de 1 000 à 20 000 mPa·s ; et un sel de borate de lithium.

2. Le liant pour électrode de batterie secondaire à électrolyte non aqueux selon la revendication 1, dans lequel le sel de borate de lithium est présent dans une plage de 0,1 % à 20 % en masse par rapport à 100 % en masse de la teneur en solide de la carboxyméthylcellulose ou de son sel.

3. Le liant pour électrode de batterie secondaire à électrolyte non aqueux selon la revendication 1 ou 2, dans lequel, lorsqu'on prépare 2 litres d'une solution aqueuse à 0,3 % en masse de la cellulose carboxyméthylée ou de son sel ayant une masse sèche B, et qu'on la filtre entièrement à travers un filtre de 250 mesh dans des conditions de pression réduite de -200 mmHg, et que l'on mesure la masse sèche A du résidu restant sur le filtre après filtration, la cellulose carboxyméthylée ou son sel ayant un rapport entre la masse sèche A et la masse sèche B inférieur à 50 ppm.

4. Le liant pour électrode de batterie secondaire à électrolyte non aqueux selon la revendication 1 ou 2, dans lequel le sel de borate de lithium est du tétraborate de lithium.

5. Le liant pour électrode de batterie secondaire à électrolyte non aqueux selon la revendication 1 ou 2, dans lequel la carboxyméthylcellulose ou son sel ayant un D90 inférieur à 100 µm, le D90 étant la taille de particule à laquelle 90 % des particules sont comprises, lorsqu'on intègre à partir d'une valeur minimale, dans une distribution granulométrique basée sur une taille moyenne en volume mesurée par un appareil de mesure de la distribution granulométrique par diffraction/diffusion laser utilisant du méthanol comme milieu de dispersion.

6. Une composition d'électrode de batterie secondaire à électrolyte non aqueux, comprenant : le liant pour électrode de batterie secondaire à électrolyte non aqueux selon la revendication 1 ou 2 ; et un composé à base de silicium.

7. Une électrode de batterie secondaire à électrolyte non aqueux, qui utilise la composition d'électrode de batterie secondaire à électrolyte non aqueux selon la revendication 6.

8. Une batterie secondaire à électrolyte non aqueux, qui utilise la composition d'électrode de batterie secondaire à électrolyte non aqueux selon la revendication 6.
